# EUROPEAN PATENT SPECIFICATION

(11) **EP 3 746 797 B1**
(45) Date of publication and mention of the grant of the patent: **07.10.2026**
(21) Application number: 19705656.7
(22) Date of filing: 31.01.2019
(51) Int. Cl.: G01N 35/00, B01L 9/02

(54) **IMAGE-BASED DECK VERIFICATION**
BILDBASIERTE DECKPRÜFUNG
VÉRIFICATION DE PLATEAU FONDÉE SUR L'IMAGE

(30) Priority: 01.02.2018 US 201862625191 P
(43) Date of publication of application: 09.12.2020
(60) Divisional application: 26201044.0
(73) Proprietor: Beckman Coulter, Inc., Brea, CA 92821 (US)
(72) Inventor: SHERRILL, Timothy P., Noblesville, Indiana 46062 (US); SCHREINER, Joseph D., Indianapolis, Indiana 46237 (US); MILLER, Robert P., Indianapolis, Indiana 46260 (US)
(74) Representative: Bevan, Emma
(86) International application number: PCT/US2019/015980
(87) International publication number: WO 2019/152604

(56) References cited:
- WO-A2-2016/090113
- US-A1- 2006 088 928
- US-A1- 2006 148 063
- US-A1- 2006 148 063
- US-A1- 2014 036 070
- US-A1- 2014 036 070
- US-A1- 2015 226 759
- US-A1- 2015 226 759
- US-A1- 2016 205 360

## Description

### CROSS-REFERENCES TO RELATED APPLICATIONS

This application claims priority to U.S. Provisional Patent Application No. 62/625,191, filed February 1, 2018.

### BACKGROUND

Sample processing systems can be used to analyze biological samples. Once a sample processing system is programmed and the necessary materials are laid out in a specific way, the system can automatically execute analyses or other processing for the samples. For example, biological samples in test tubes can be assembled and staged in a specified position on a deck. Also, pipette tips can be assembled and staged in another position on the deck and test containers such as microwell plates may be positioned at yet another position on the deck. Then, when an analysis process has started, a robotic arm can retrieve one or more pipette tips and use the tips to transfer a portion of the samples from some of the test tubes as needed and transport them to the test containers for further processing.

While these automated systems can efficiently analyze biological samples when properly set up, they rely on human operators to properly prepare the system before the analysis process is started. If a human operator places an array of test tubes in the wrong area, or forgets to prepare the test tubes, the system may not be able to complete the analysis process and/or it may cause the system to malfunction. Such human errors are common, especially for systems that are frequently reconfigured for running different experiments, as well as for processes that involve multiple types of components that need to be placed in particular locations. Accordingly, human preparation errors frequently cause automated biological sample analysis processes to fail.

Some techniques have been used to address this human error problem. For example, grid-like illustrations and virtual representations are used to show the operator where different components should be placed in a staging area. However, even with such tools, operators continue to make mistakes, as they have trouble relating illustrations to the real-world environment. For example, the operator may place components in a similar pattern, but with each component accidentally shifted to the side by one location. Additionally, scanners have been introduced that move from station to station, checking for the type of component placed in each station to ensure that each required component has been prepared and placed in its proper location. However, the scanning process can take too much time to efficiently check the entire staging area. Accordingly, there is still a need for an improved method of preparing components and a deck staging area.

Further, alternative versions of some components may be acceptable for some techniques. A fully automated scanning or recognition system for components may identify the acceptable alternative components as different from the requirements of a protocol. This may cause the system to needlessly abort a protocol that could have been run successfully. There is thus a place for human judgment in an improved method for preparing or verifying components within a deck staging area.

Embodiments of the invention address these and other challenges, individually and collectively.

In US2014036070, there is described a method of detecting an original arrangement of laboratory articles of a laboratory work station records reference digital images with a digital camera. An image is displayed and visible regions with characteristic features are selected by a user within an input device. Reference image sections and corresponding reference image parameter files are produced and stored. A current arrangement of laboratory articles is compared with a previously recorded original arrangement. Detection of the current arrangement occurred by recording current digital images with a digital camera and creating current image sections defined by X/Y parameters of the reference image parameter files from the current digital images. A computer-based comparison of the processed current image sections with the processed reference image sections occurred and an analysis of this comparison and the display of agreements, deviations and errors is found.

In US2016205360, configurations of a fluid handling apparatus that comprises a projector configured to provide an image of labware onto a support are described. The provided image can be used to assist a user in proper placement of the labware onto the support. The system can be configured to determine if the labware has been properly placed prior to beginning any fluid handling operations.

In US2006148063, there is described a method and apparatus for continuous workflow processing of biological samples. The apparatus includes a probe for dispensing one or more reagents from one or more reagent containers onto one or more biological sample carriers. The method and apparatus includes processing each biological sample according to a respective sequence of protocol steps which may be ordered by a scheduler protocol. The method and apparatus also includes network capability for connectivity with additional equipment for receiving or transmitting pertinent data via the network.

In US2015226759, there is described a medical apparatus for analyzing fluid samples that includes an outer casing, a slide loading mechanism disposed within the outer casing for loading fluid analysis slides, a slide ejecting mechanism disposed within the outer casing for ejecting fluid analysis slides, an evaporation cap opening mechanism disposed within the outer casing for opening an evaporation cap, an evaporation cap closing mechanism disposed within the outer casing for closing an evaporation cap, a drawer locking mechanism disposed within the outer casing for locking a drawer associated with the outer casing, a camera disposed within the outer casing, and a robot disposed within the outer casing. The robot is movable in three dimensions and has means for conducting three or more of the following operations: slide loading; slide ejecting; evaporation cap opening; evaporation cap closing; drawer locking; and camera manipulation

### BRIEF SUMMARY

The invention is set out in the appended set of claims.

The invention is described in further detail below, with reference to the drawings.

### BRIEF DESCRIPTION OF THE DRAWINGS

**FIG.** 1 shows a block diagram of a processing system according to an embodiment of the invention.
**FIG.** 2 shows a diagram of a deck according to embodiment of the invention.
FIG. 3 shows a flowchart illustrating a deck verification process according to embodiments of the invention.
FIG. 4 shows an example reference image of a deck according to an embodiment of the invention.
**FIG.** 5 shows an example of a comparison between a reference image and a new image according to an embodiment of the invention.
**FIGS. 6A-6B** show an example of different deck verification views that can be available to the operator, according to an embodiment of the invention

### DETAILED DESCRIPTION

Embodiments of the invention can be used to prepare a deck or staging area for an analysis or other process. For example, after a human operator places different components in different places on the deck, an imaging device captures an image of the prepared deck. This image is compared with another image that shows a correct setup of the deck. The differences between the current image and the previous image can be highlighted and shown to the operator. The operator can then inspect, in the real-world, areas that correspond to the highlighted areas of the image and make any necessary corrections (e.g., swapping an incorrect component for a correct component).

The image can be captured and analyzed quickly, facilitating a fast correction process. Additionally, the operator can understand a real-world image better than a deck illustration, and thus can correct any errors quickly and effectively.

Prior to discussing specific embodiments of the invention, some terms may be described in detail.

A "component" may include a part, a piece, or an element. Components can include tools and constituent elements used to complete a procedure, such as biological experiment or a manufacturing process. Examples of components include supplies used in biological experiments, such as sample tubes, pipette tips, biological samples, reagents, chemicals, microwell plates, and any other suitable material or labware. Components can sometimes be grouped together in a tray or other suitable package. In some embodiments, a certain type of component can be typically found in a uniquely configured package, or in a package with a specific label.

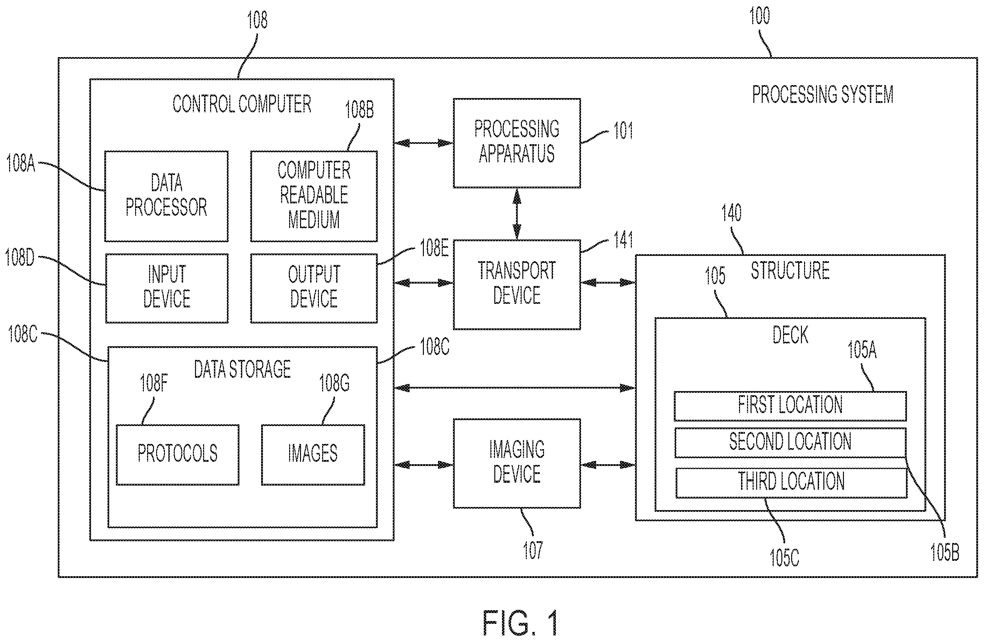

**FIG. 1** shows a high-level block diagram of a processing system **100** according to an embodiment of the invention. The processing system **100** comprises a control computer **108** operatively coupled to a structure **140,** a transport device **141,** a processing apparatus **101,** and an imaging device **107.** Input/output interfaces may be present in each of these devices to allow for data transmission between the illustrated devices and any external devices. An exemplary processing system is the Biomek i7 Automated Workstation marketed by the Beckman Coulter, Inc. of Brea, California.

Embodiments of the invention can include imaging a deck in order to determine whether or not the components have been correctly arranged on the deck. For explanatory purposes, the processing system **100** will mainly be described as a sample processing system for processing and analyzing biological samples. However, embodiments can apply to any other suitable type of process that involves a deck with pre-loaded components.

The structure **140** may include support legs, a power source, a deck 105, and any other suitable feature. The deck **105** can include a physical surface (e.g., a planar physical surface) upon which components can be placed and accessed for experiments, analyses, and processes. In some instances, the deck **105** may be a floor or a tabletop surface. The deck **105** can be subdivided into a plurality of discrete deck locations for placing different components. The locations can be directly adjacent, or may be spaced apart. Each deck location can include dividers, inserts, and/or any other support structure for separating the different deck locations and containing components. For exemplary purposes, **FIG. 1** shows a first location **105A,** a second location **105B,** and a third location **105C** on the deck, though additional locations can be included.

The transport device **141** (which can represent multiple transport devices) can prepare and/or transport components between the deck **105** and the processing apparatus **101,** as well as between different locations on the deck **105.** Examples of transport devices may include conveyors, sample tracks, pick and place grippers, laboratory transport elements that can move independently (e.g., pucks), robotic arms, and other tube or component conveying mechanisms. In some embodiments, the transport device **141** includes a pipetting head configured to transfer liquids. Such a pipetting head may transfer liquids within removable pipette tips and may include grippers suitable for grasping or releasing other labware, such as microwell plates.

The processing apparatus **101** can include any number of machines or instruments for executing any suitable process. For example, the processing apparatus **101** can include an analyzer, which may include any suitable instrument that is capable of analyzing a sample such as a biological sample. Examples of analyzers include spectrophotometers, luminometers, mass spectrometers, immunoanalyzers, hematology analyzers, microbiology analyzers, and/or molecular biology analyzers. In some embodiments, the processing apparatus **101** may include a sample staging apparatus. A sample staging apparatus can include a sample presentment unit for receiving sample tubes with biological samples, a sample storage unit for temporarily storing sample tubes or sample retention vessels, a means (or device) for aliquotting a sample (such as an aliquottor), a means for holding at least one reagent pack comprising the reagents needed for an analyzer, and any other suitable features.

The imaging device **107** can be any suitable device for capturing an image of the deck **105** and any components on the deck **105** (or the entire structure **140).** For example, an imaging device **107** can be any suitable type of camera, such as a photo camera, a video camera, a three dimensional image camera, an infrared camera, etc. Some embodiments can also include three dimensional laser scanners, infrared light depth-sensing technology, or other tools for creating a three dimensional surface map of objects and/or a room.

The control computer **108** can control the processes run on the processing system 100, initially configure the processes, and check whether a component setup has been correctly prepared for a process. The control computer **108** can control and/or transmit messages to the processing apparatus **101,** the transport device **141,** and/or the imaging device **107.** The control computer **108** may comprise a data processor **108A,** a non-transitory computer readable medium **108B** and a data storage **108C** coupled to the data processor **108A,** one or more input devices **108D,** and one or more output devices **108E.**

Although the control computer **108** is depicted as a single entity in **FIG. 1****,** it is understood that the control computer **108** may be present in a distributed system or in a cloud-based environment. Additionally, embodiments allow some or all of the control computer **108,** the processing apparatus **101,** the transport device **141,** and/or the imaging device **107** to be combined as constituent parts in a single device.

The output device **108E** may comprise any suitable devices that may output data. Examples of an output device **108E** may include display screens, speakers, and data transmission devices.

The input device **108D** may include any suitable device capable of inputting data into the control computer **108.** Examples of input devices include buttons (e.g., a keyboard and mouse), touchscreens, touch pads, microphones, etc.

The data processor **108A** may include any suitable data computation device or combination of such devices. An exemplary data processor may comprise one or more microprocessors working together to accomplish a desired function. The data processor **108A** may include a CPU that comprises at least one high-speed data processor adequate to execute program components for executing user and/or system-generated requests. The CPU may be a microprocessor such as AMD's Athlon, Duron and/or Opteron; IBM and/or Motorola's PowerPC; IBM's and Sony's Cell processor; Intel's Celeron, Itanium, Pentium, Xeon, and/or XScale; and/or the like processor(s).

The computer readable medium **108B** and the data storage **108C** may be any suitable device or devices that can store electronic data. Examples of memories may comprise one or more memory chips, disk drives, etc. Such memories may operate using any suitable electrical, optical, and/or magnetic mode of operation.

The computer readable medium **108B** may comprise code, executable by the data processor **108A** to perform any suitable method. For example, the computer readable medium **108B** may comprise code, executable by the processor **108A,** to cause the processing system 100 to perform a method including causing an imaging device to capture a second image of a deck of a structure, the deck comprising a plurality of discrete deck locations, a plurality of different components respectively in the discrete deck locations; comparing, the second image to a first image stored in a memory in a computer apparatus; determining if there are any differences between the second image and the first image; and outputting an indication of any differences between the second image and the first image that may cause disruption or failure of a process run on an apparatus.

The computer readable medium **108B** may comprise code, executable by the data processor **108A,** to receive and store process steps for one or more protocols (e.g., a protocol for analyzing a biological sample), as well as to control the structure **140,** the transport device **141,** and/or the processing apparatus **101** to execute the process steps for the one or more protocols. The computer readable medium **108B** can also include code, executable by the data processor **108A,** for receiving results from the processing apparatus **101** (e.g., results from analyzing a biological sample) and for forwarding the results or using the results for additional analysis (e.g., diagnosing a patient). Additionally, the computer readable medium **108B** may comprise code, executable by the data processor **108A,** for comparing two images of a deck, identifying differences between the two images, and displaying the images with indicated differences to a user.

The data storage component **108C** may be internal or external to the control computer **108.** The data storage component **108C** may include one or more memories including one or more memory chips, disk drives, etc. The data storage component **108C** may also include a conventional, fault tolerant, relational, scalable, secure database such as those commercially available from Oracle^{™} or Sybase^{™}. In some embodiments, the data storage **108C** may store protocols **108F** and images **108G.**

The protocols **108F** in the data storage component **108C** may include information about one or more protocols. A protocol can include information about one or more processing steps to complete, components used during the process, a component location layout, and/or any other suitable information for completing a process. For example, a protocol can include one or more ordered steps for analyzing a biological sample. A protocol can also include steps for preparing a list of components before starting the process. The components can be mapped to specific locations on the deck **105** where the transport device **141** can obtain the components in order to transport them to the processing apparatus **101.** This mapping can be encoded as instructions for operating the transport device **141,** and the mapping can also be represented by a virtual image shown to a user such that the user can place the components on the deck **105.** Embodiments allow the processing system **100** to be used for multiple processes (e.g., multiple different biological analyses). Accordingly, information about multiple protocols **108F** can be stored and retrieved when needed. Components on the deck **105** can be rearranged, changed, and/or replenished as necessary when changing from a first process to a second process, or when re-starting a first process.

An image can include a depiction of one or more objects. As examples, images can include digital pictures or photographs, videos, three-dimensional pictures and videos, color photos, black and white photos, high dynamic range images (e.g., combining multiple images taken of the same subject with different exposures), etc. The images **108G** in the data storage **108C** may include a real-world visual representation of the deck 105. In each image, the deck **105** can be shown in a ready state for beginning a certain process, with all necessary components placed in their proper locations. Each of the images **108G** can be associated with a specific protocol from the stored protocols **108F.** In some embodiments, there may be a single image for certain protocol. In other embodiments, there can be multiple images (e.g., from different angles, with different lighting levels, or containing acceptable labware substitutions in some locations) for a certain protocol. The images **108G** can be stored as various types or formats of image files including JPEG, TIFF, GIF, BMP, PNG, and/or RAW image files, as well as AVI, WMV, MOV, MP4, and/or FLV video files.

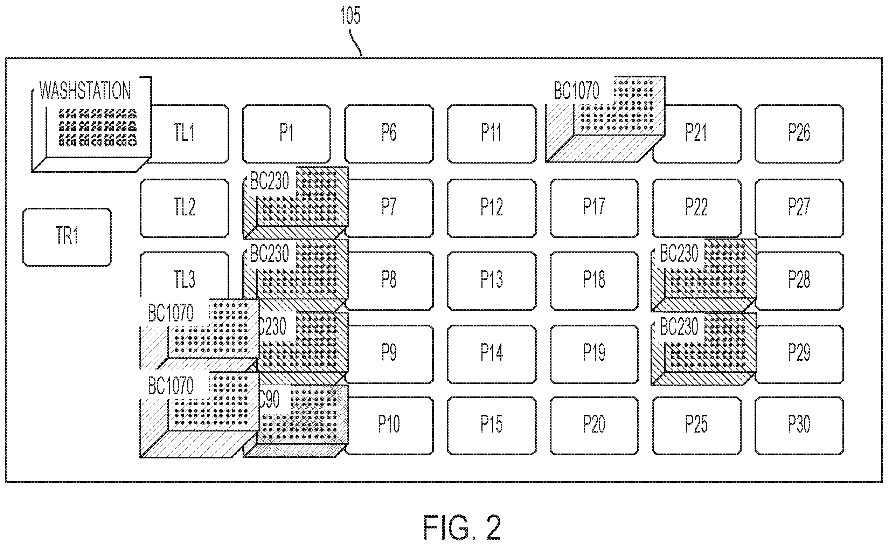

As mentioned above, the deck **105** is subdivided into a plurality of discrete deck locations for staging different components. The discrete locations may be of any suitable size. An example of a deck **105** with a plurality of locations is shown in **FIG. 2****.** The deck **105** in **FIG. 2** shows separate areas numbered P1 through P30, as well as TL1 through TL5, TR1, and a wash station, each of which can operate as separate locations for separate types of components or packages of components. Some of the separate area numbers in **FIG. 2** are obscured by overlying components: these locations may be identified by numbers sequential to those associated with visibly numbered separate areas. Embodiments allow the deck **105** to have additional locations or fewer locations as desired. While these locations can be numbered or named, they may or may not be physically labeled or marked on the deck **105** in the real world.

Embodiments allow some or all of the locations to be occupied by a predefined type of component according to a certain protocol. As an example, **FIG. 2** shows locations P2, P3, P4, P5, P16, P23, P24, TL4, and TL5 each being loaded with packages of components as specified by a first protocol. Some of the locations can include the same type of component. For example, locations P2, P3, and P4 all include the component type labeled BC230, which can represent a certain type of test tube, microwell plate, pipette tips, or any other suitable labware component.

In some embodiments, one or more locations may not be physically a part of the structure **140** or deck **105,** but may instead be on the floor or another surface adjacent to the structure **140** and/or the deck **105.** These locations may be included because they can still be accessed by the transport device **141.** For example, locations TL1 through TL5, TR1, and/or the wash station may be physically separate from the structure **140** and/or the deck **105.**

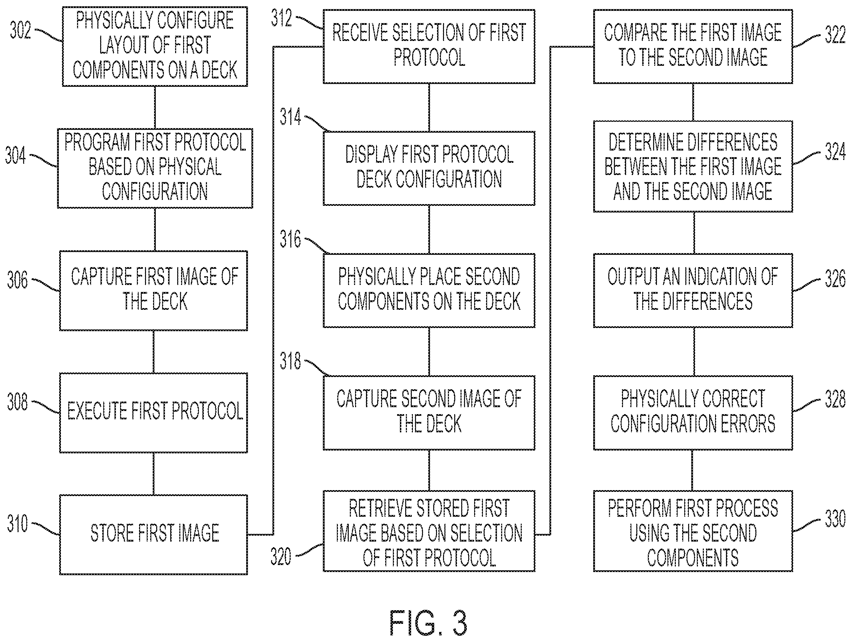

**FIG. 3** shows a high level flowchart illustrating a deck verification process according to embodiments of the invention.

At step **302,** during configuration of a new protocol (e.g., referred to as the first protocol), an operator can physically configure the layout of a first set of components on the deck. For example, the operator can determine where to place a first type of components (e.g., labware such as pipette tips) in one or more first locations, where to place a second type of components (e.g., labware such as sample tubes) in one or more second locations, and so forth. For example, the processing apparatus and deck can be used for executing multiple processes, and the processing apparatus, transport device, and/or control computer can be programmed to allow a user to configure types of components that are to be located in a plurality of discrete deck locations so that different processes can be run on the apparatus.

At step **304,** the operator can program the first protocol based on the established location configuration of the components. For example, the control computer (and/or processing apparatus) can receive, from the operator, information about the specific locations in which different type of components will be placed for use during a first process. This can be done using a menu that allows a user to drag and drop representations of components into specific locations. The operator can also program the steps of the first process (e.g., the steps needed to perform a certain type of biological sample analysis), and the manner in which the components are to be used during the first process. Embodiments allow this step of protocol programming to take place either before or after the first image is captured at step **306.**

At step **306,** the control computer can cause the imaging device (e.g., a camera) to capture a first image of the deck of the structure. The image can be taken from a static camera position and used for later reference. The image may be captured at a moment in time when the deck has been fully loaded with the components, and when the first process performed in step **308** has not yet begun (e.g., such that the components have not yet been used, moved, or otherwise disturbed). Thus, the image can capture a plurality of discrete deck locations as well as a first plurality of different components respectively in the discrete deck locations.

At step **308,** the control computer can execute the first process as defined by the first protocol. For example, the transport device can transport the components from the deck to one or more instruments of the processing apparatus according to the first process, and the processing apparatus can manipulate the components to perform the first process, as well as communicate any results back to the control computer. For example, the processing apparatus can be an analyzer, and the first process can include analyses of biological samples. Step **308** can take place after step **306,** such that the image reflects the deck configuration as it appears before the process begins.

At step **310,** the control computer can store (e.g., in the data storage or other memory) the first image of the deck. The first image can be stored as associated with the first protocol and used as a reference image for future executions of the first process. In some embodiments, the operator and/or control computer can determine to store the first image after step **308** if the first process is successfully completed. If the first process is not successfully completed, the first image used with the unsuccessful first process can be discarded, the component layout on the deck can be reconfigured and/or the first process adjusted, and another first image can be captured. Once the first process has been successfully completed, the first protocol can be saved in the data storage memory along with a captured first image corresponding to the successful first protocol.

At step **312,** at a later time, the control computer can receive a selection of the first protocol. For example, the output device can provide a selection window for the operator to select among various protocols, and the operator may select (e.g., via the input device) the first protocol in order to run the first process. This step can take place after a different process has been run on the processing system.

At step **314,** the control computer can, via the output device, display a first protocol deck configuration as specified by the selected first protocol. The display can include a virtual representation of the deck, the different deck locations, and the components to be placed at each location. For example, the display can be similar to **FIG. 2****.** In some embodiments, the control computer can also display the stored image along with any other suitable type of information for instructing the operator how to prepare the system.

At step **316,** the operator or a machine under the operator's control can physically place a second set of components on the deck. The operator can use the protocol instructions and displayed component diagram as a guide for placing specific types of components in specific locations. If the operator correctly places the components, each of the locations will have the same type of component as previously staged during the initial configuration of the protocol (e.g., in step **302).**

At step **318,** the control computer causes the imaging device to capture a second image of entire deck of the structure. In some embodiments, the second image of the deck is captured after the operator is finished placing the second set of components, and before the process is executed. Thus, the second image can capture the plurality of discrete deck locations as well as a second plurality of different components respectively in the discrete deck locations. The second image can be taken with the same camera, from the same position and angle, and/or otherwise taken in the same manner as the first image. As a result, the second image and first image are compared to identify differences. In some cases, multiple images from different angles or perspectives can be taken.

At step **320,** the control computer can retrieve the stored first image from the data storage (or other memory) based on the selection of the first protocol.

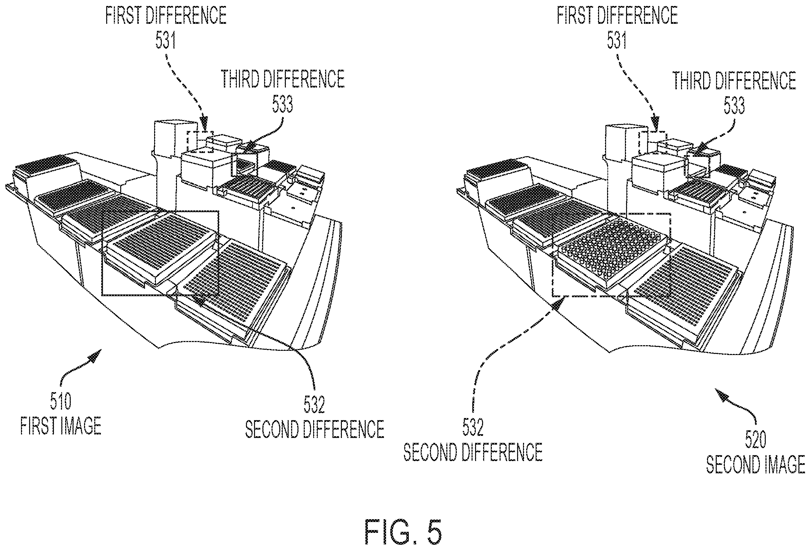

At step **322,** the control computer compares the first image to the second image in order to identify any relevant differences between the entire second image and the entire first image. For example, the control computer can identify, for each location on the deck, whether components shown in the second image are different than components shown in the first image. In some embodiments, the control computer can analyze the pixels or objects in each image to identify difference in colors, shapes, component labels, or any other suitable indicators. These differences may be indicative of incorrect components in the second image. In some embodiments, the control computer can determine, based on the image characteristics (e.g., colors, shapes, etc.), the actual types of components in each image and determine whether the components are the same or different. Additional details regarding the image comparison are discussed below with respect to **FIG. 5****.**

At step **324,** the control computer determines, based on the image comparison, if there are any differences (e.g., one or more differences) between the entire first image and the entire second image. Additionally, the control computer can determine whether any locations are not visible in the images (e.g., due to the camera position and angle).

In some embodiments, whether or not a difference exists between images can be based upon a threshold of similarity. For example, if portions of two images are 98% similar, then this may be sufficient for the control computer to conclude that there is no meaningful difference.

At step **326,** the control computer can display or otherwise output (e.g., via the output device) an indication of any determined differences to the operator. Such differences could cause disruption or failure of the process if the process apparatus is allowed to run without correction. The output can include the first image and/or the second image, as well as difference indicators on the images. For example, components and locations in question can be highlighted, circled, or otherwise identified for the operator. Indicators can show the operator, for example, a deck location that has different components in the second image and first image. The output might also include the virtual representation from step **314.**

If no differences were found, the method can continue to step **330** where the process is performed. For example, the output can indicate that there are no differences between the second image and the first image that may cause disruption or failure of the process run on the apparatus, and then the operator can initiate execution of the first process.

At step **328,** the operator can physically correct one or more component configuration errors based on the displayed differences. Displaying the first and or second image to the user with highlighted differences can faciliate a better operator response, as real-world images can be easier for a person to understand than a virtual representation. The differences in the images may not all require correction. For example, the correct type of component may have been used, but it may be flagged because it had a different color (which may not affect the process). Accordingly, the operator may make one or more corrections (e.g., swapping certain components in certain locations), but may not change the components at every location with a difference indicated in the images.

At step **330,** the processing system can perform the first process using the second components placed on the deck. The process may be completed successfully as the image comparison may have enabled the operator to identify and correct any preparation errors.

Embodiments allow the deck setup to be verified before each subsequent run of the first process and/or alternative processes. For example, steps **312-330** can be repeated each time the first process is being executed.

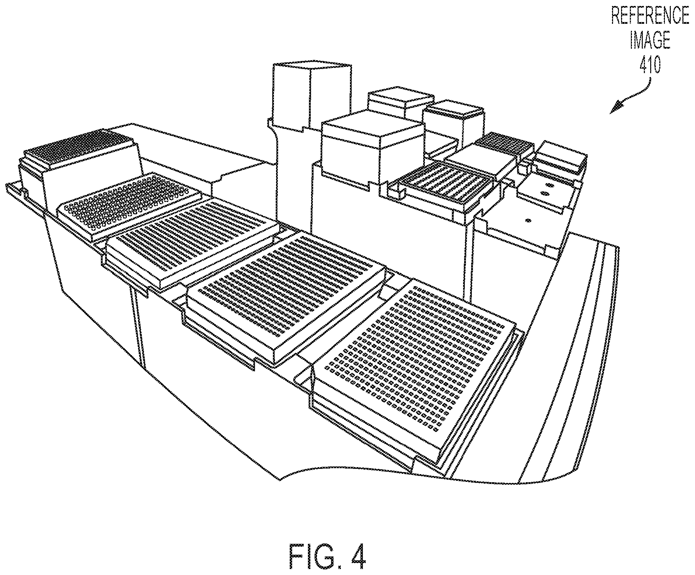

As described with respect to step **306,** the imaging device can capture and store the first image of the deck to be used as a reference for comparing with a later image. An example of such a reference image **410** is shown in **FIG. 4****,** according to an embodiment of the invention. The reference image **410** can be taken from any suitable perspective, such as a perspective that optimizes the view of the components, or from a position where the imaging device is least likely to be disturbed. The reference image **410** can include some or all deck locations (e.g., depending on the camera angle, position, and field of view). It is possible that some locations can be shielded from view by components or other obstructions. In some embodiments, multiple reference images can be taken from multiple persepectives in order to show all the locations and components. Additionally, multiple images can be combined together to create one larger image with more inclusive perspective.

The components shown in the reference image **410** can be distinguished based on the size, shape, color (e.g., a pipette tip rack color), well density, number of stacked plates (e.g., one location can inclue three stacked trays of pipette tips), and/or any other suitable physical feature of the component or the component's container. Additionally, the component containers may include labels, barcodes, or other identifiable features.

Because the reference image **410** can be a real-world image, the reference image **410** can include objects other than the components and deck. For example, the background of the image can include other lab equipment, walkways, shadows, and personel, etc. that may be present in the image. In some embodiments, such additional information can be shaded or otherwise ignored by the control comptuer during the comparison process. This can prevent the control computer from finding and displaying irrelevant differences in the background when comparing the reference image **410** with a subsequent image.

**FIG. 5** shows an example of a comparison between a first image **510** (e.g., a reference image) and a second image **520** (e.g., a new image) according to an embodiment of the invention. The display shown to a user (e.g., as described above with respect to step **326)** can include one or both of these images.

As shown in **FIG. 5****,** one or more locations can be indicated in the first image **510** and/or second image **520.** The locations can be indicated because they include different content in the first image **510** and second image **520.** For example, a first difference **531** between the first image **510** and second image **520** can be indicated because that deck location does not have the same appearance in the two images. Simiarly, a second difference **532,** a third difference **533,** and any other suitable number of differences can be indicated.

In **FIG. 5****,** the differences are indicated by superimposing a rectangular frame over the deck location. Embodiments allow alternative indications to be used, such as highlights, arrows, coloring, increased brightness, listing of the locations, and/or any other suitable indication. In some embodiments, the second image **520** can be made partially transparent and then superimposed over the first image **510,** such that non-matching parts of the images do not blend together and thus become visibly evident to a viewer. Further, when the first image **510** and the second image **520** are shown in the same space in this manner, a slider tool may be used to adjust how intensely either image is shown. For example, sliding to the left can cause the first image **510** to be shown more vividly and the second image **520** to be more transparent, while sliding to the right can cause the second image **520** to be shown more vividly and the first image **510** to be more transparent.

In some embodiments, some or all of the indicated differences can be indicative or problems with the deck setup (e.g., incorrect components placed in those locations, not enough of a component a location, no component in a location where there should be one, incorrect type of component at the location, etc.), and the problems can cause disruption or failure of the process if the deck setup is not corrected. Embodiments also allow the control computer to identify image differences without determining whether or not the differences would cause a problem. For example, the differences can represent a possible problem which the operator is advised to inspect (e.g., a component package has a different color, which may or may not be indicative of the wrong type of component). Additionally, concerns other than differences can be identified, such as deck locations that are not visible in the image.

The control computer can also concurrently output a virtual representation of the protocol's deck configuration, such as the display shown in **FIG. 2****.** This can provide the operator with an additional perspective, and can assist the operator with identifying the type of component assigned to an indicated location. The control computer can additionally provide a list of details related to the possible errors, the list describing the location of the possible error, as well as information about what led to the diagnosis of the possible error (e.g., an unexpected color or shape)

In some examples not falling under the current invention, the control computer may only compare portions of the images that include the deck and/or components, and the control computer may disregard other portions of the image (e.g., the background, walkway perimeters, etc.). Additionally, irrelevant portions first image **510** and/or second image **520** can be erased, blacked out, shaded, masked, or otherwise obscured such that the operator's attention is not diverted from the relevant portions (e.g., the deck and components). This is shown in the figures, as the non-essential perimeter areas of the images in **FIG. 5** are darkened as compared to the original reference image shown in **FIG. 4****.**

When determining the differences between the first image **510** and the second image **520,** the control computer can use any suitable image comparison technique, as well as any suitable image comparison software. In one example, the control computer can compare the color value assigned to each pixel in both images, and identify values that differ. A difference in the images may be triggered by a single pixel differing, or by a group (e.g., 10, 20, or 100) of adjacent pixels all differing.

In some embodiments, instead of comparing small groups of pixels, the control computer can identify each deck location and/or component package in the images (e.g., based on a component package perimeter outline), and can determine whether the location or component package is shown differently between the two images. Identifiable differences can include package color, package shape, component label or barcode, well density, number of stacked plates, well shapes, whether labware is lidded, or any other visually identifiable difference. Some differences, such as color, can be indicative of an incorrect component, or may be the result of the same component having a different package color. Either way, the difference can be pointed out to the operator such that the operator can determine whether correction is needed.

In some embodiments, the control computer can map a certain range of pixels to a deck location. For example, the control computer can map one of the discrete deck locations to a pixel range in the first image or the second image. Thus, the control computer can determine which location (e.g., location P14) is associated with a difference identified in the second image **520.** This allows the control computer to label the differences with the location number to assist the operator with identifying the location in question.

The control computer may be able to analyze an image and determine what type of component is shown in each location. As a result, the control computer can identify if a location includes, for example, test tubes in the first image **510,** but that same location includes pipette tips in the second image **520.**

As an example, the first difference **531** can represent a deck location that is not visible in either image, the second difference **532** can represent a component package that has a different color or different component type in the second image **520,** and the third difference **533** can represent a deck location that is incorrectly empty in the second image **520.**

In some embodiments, certain differences in component appearance can be disregarded. For example, if not desired to be identified, the control computer may not report differences in liquid color (e.g., liquid in a well, tube, or reservoir), as liquid color can change from process run to process run. Similarly, differences in the amount of a liquid can be ignored, differences in hand-written information can be ignored, and any other suitable variations that may not cause any process issues can be ignored.

In some embodiments, the control computer may be able to discard the first image **510** and use the second image **520** as the new reference, for example if instructed by the operator. Alternatively, the operator may choose to add the second image **520** as another reference of an acceptable deck in addition to the first image **510** (e.g., instead of discarding the first image **510).** Additionally, the operator may be able to instruct the control computer to accept the current setup and proceed with the process without making any changes to the deck.

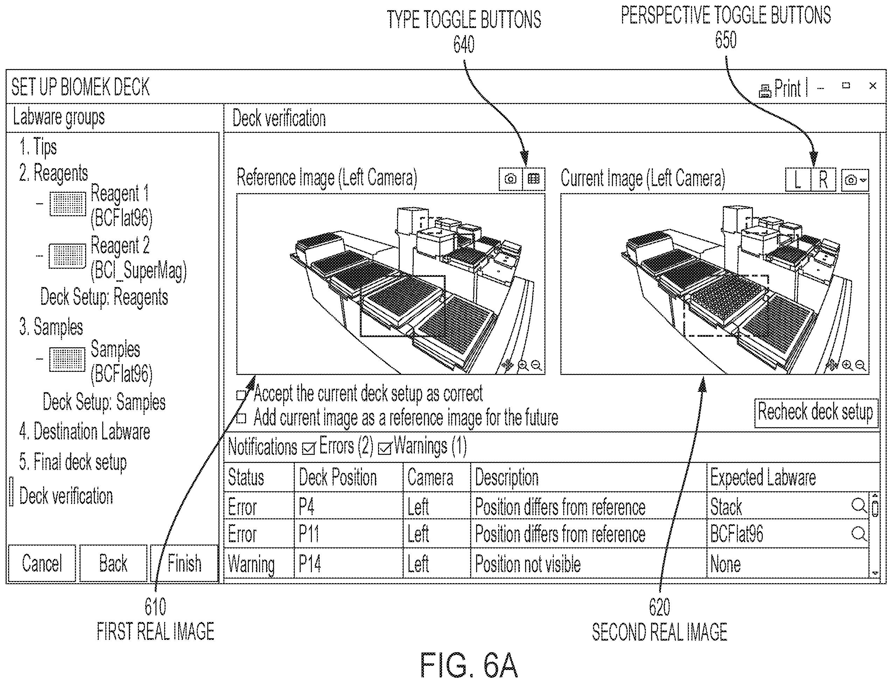

**FIGS. 6A-6B** show an example of different deck verification views that can be available to the operator, according to an embodiment of the invention. The control computer can output multiple displays that show image differences and/or deck setup errors to the operator in different manners. The operator may be able to toggle between these different displays.

**FIG. 6A** shows a first display which can include a first real image **610** and a second real image **620.** Similar to **FIG. 5****,** the first real image **610** can be a real image (e.g., taken with a camera) of a deck taken during the initial configuration of a process. The second real image **620** can be another real image (e.g., taken with a camera) of a deck taken when preparing the deck at a later time for a subsequent execution of the process.

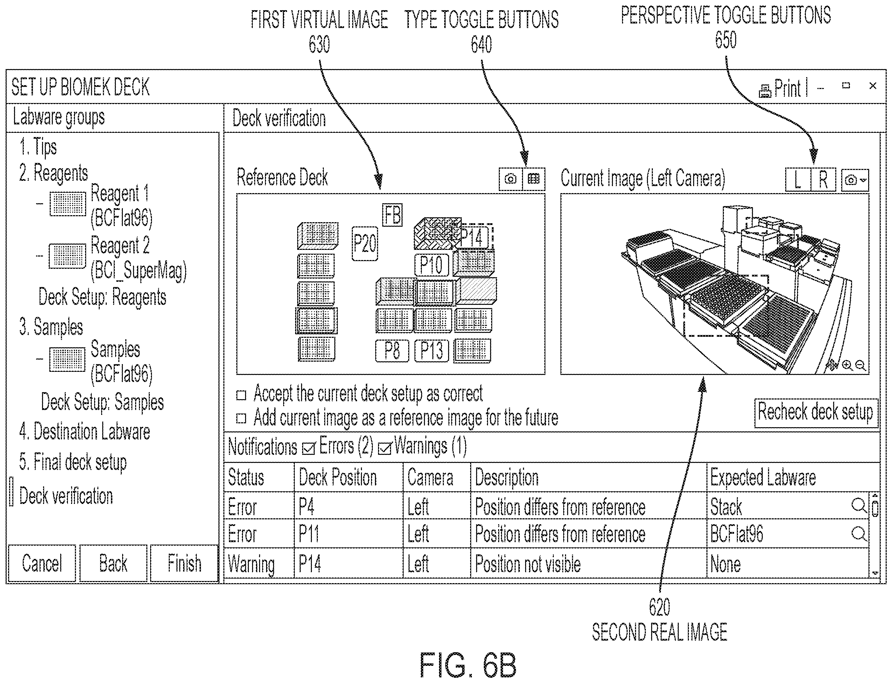

**FIG. 6B** shows a second display which replaces the first real image **610** with a first virtual image **630.** The first virtual image can include a non-real graphic depiction of the deck that demonstrates which types of components are assigned to each location. For example, the first real image **610** can be a virtual representation of an overhead view of the deck. Embodiments allow the first virtual image **630** to include indications (e.g., highlights) of the deck locations which might include errors (e.g., based on image differences).

As a result, the operator can switch between viewing a real image of a correct deck configuration (e.g., the first real image **610)** and a virtual representation of a correct deck configuration (e.g., first virtual image **630).** While the operator can toggle between these options (e.g., using the type toggle buttons **640),** the output device can continually display a real image of the current deck setup (e.g., the second real image **620).** These different images can provide the operator with multiple perspectives and depictions of the deck, as well as multiple comparisons between a correct deck setup and the current deck setup, such that the operator can better understand how the deck should look and exactly which deck locations might need to be corrected.

Embodiments additionally allow the operator to manipulate the display in other manners. For example, the operator can switch between different real images captured by different imaging devices having different perspectives of the deck. This is shown by the perspective toggle buttons **650** which can switch between images from a left camera and a right camera. As another example, the operator may be able to zoom in and out onto a certain image, as well as reset to a full camera view.

In addition to toggling a first display area between the first real image **610** and the first virtual image **630,** the output may be configured to switch a second display area between the second real image **620** and the first real image **610.** As a result, the operator may be able to switch, in the same space, between the current deck setup and the correct deck setup. When toggling in this manner, the correctly-configured areas can appear the same, and the incorrectly prepared locations can change. The display areas that change in time when switching between the images can be apparent to the viewer.

Additionally, in some embodiments, when the user selects or moves a mouse pointer over a highlighted deck location (or a listed notification), the output device can display additional information concerning that location, such as the expected type of component for that location. Further, the display can include a list of notifications (e.g., image differences or errors), and if the operator selects an entry in the notification list, the images can be modified to focus on the location associated with the notification (e.g., by zooming in on the deck location and/or choosing an optimal camera perspective).

Embodiments of the invention provide a number of advantages. For example, embodiments advantageously provide a user/operator with an intuitive and understandable tool for identifying and correcting errors related to the preparation of components on a deck structure. Humans often have difficulty understanding written instructions, alphanumeric part numbers, virtual representations of physical spaces and grids, and other typical sources of information instructing how to prepare a processing system for executing a process. As a result, human operators often make errors when loading components and otherwise setting up a processing system, and this causes the process to fail or be delayed. Embodiments of the invention overcome this problem by incorporating an imaging system, taking images of the deck at different times, and analyzing the images for disparities. For example, embodiments include taking a real image of a correctly-prepared system, taking another real image at a later time when the system is prepared for a second time, and then finding differences between the images. This provides the human operator with a marked-up photograph that can be quickly and easily reviewed and understood, and thereby enables the operator to correct and differences with a high rate of success. Since any errors can be corrected before the process begins, the process can be completed with a high rate of success and a low rate of failure and delays.

The above description is illustrative and is not restrictive. Many variations of the invention will become apparent to those skilled in the art upon review of the disclosure. The scope of the invention should, therefore, be determined not with reference to the above description, but instead should be determined with reference to the appended set of claims.

One or more features from any embodiment may be combined with one or more features of any other embodiment without departing from the scope of the invention.

A recitation of "a", "an" or "the" is intended to mean "one or more" unless specifically indicated to the contrary.

## Claims

1. A method comprising:
a) causing (318) an imaging device (107) to capture a second image (520) of an entire deck (105), the deck (105) comprising a plurality of discrete deck locations (105A, 105B, 105C), a plurality of different components respectively in the discrete deck locations (105A, 105B, 105C);
b) comparing (322), by a processor (100) in communication with the imaging device (107), the second image (520) to a first image (510) stored in a memory (108C) in a computer apparatus (108);
c) determining (324), by the processor (100), if there are any differences between the entire second image (520) and the entire first image (510); and
d) outputting (326), by an output device (108E) in communication with the processor (100), an indication of any differences between the second image (520) and the first image (510) that may cause disruption or failure of a process run on an apparatus (101),
wherein the first image (510) comprises a digital image separate from the second image (520).

2. The method of claim 1, wherein the processor (100) determines if there are any differences between the second image (520) and the first image (510) using an image comparison technique, optionally using any suitable image comparison software.

3. The method of claim 1, wherein the plurality of different components is a second plurality of different components, and the first image (510) comprises a first plurality of different components in the discrete deck locations (105A, 105B, 105C), and wherein indication of any differences includes at least one deck location having different components in the second and first images (520, 510).

4. The method of claim 1, wherein determining if there are any differences between the second image (520) and the first image (510) includes determining a first difference between the second image (520) and the first image (510), the first difference being associated with a first discrete deck location from the plurality of discrete deck locations (105A, 105B, 105C), and wherein the indication of any differences includes a representation of the second image (520) having a highlighted area, the highlighted area associated with the first discrete deck location associated with the first difference between the second image (520) and the first image (510).

5. The method of claim 1, wherein the indication indicates that there are no differences between the second image (520) and the first image (510) that may cause disruption or failure of the process run on the apparatus (101).

6. The method of claim 1, wherein the apparatus (101) is programmed to allow a user to configure types of components that are to be located in the plurality of discrete deck locations (105A, 105B, 105C) so that different processes can be run on the apparatus (101).

7. The method of claim 1, wherein the components comprise labware, and wherein the imaging device (107) comprises a camera.

8. The method of claim 1, wherein the apparatus (101) includes an analyzer that analyzes biological samples.

9. The method of claim 1, wherein the plurality of different components is a second plurality of different components, and the first image (510) comprises a first plurality of different components, wherein the first image (510) was formed by:
before capturing the second image (520), capturing the first image (510) by the imaging device (107), the deck (105) comprising the plurality of discrete deck locations (105A, 105B, 105C), the first plurality of different components respectively in the discrete deck locations (105A, 105B, 105C).

10. The method of claim 9, further comprising:
before capturing the first image (510), receiving, by the apparatus (101), a protocol to perform the process;
after capturing the first image (510), performing, by the apparatus (101), the process; and
after performing the process, storing the first image (510) in the memory (108C).

11. The method of claim 1, further comprising mapping one of the plurality of discrete deck locations (105A, 105B, 105C) to a pixel range in the second image (520).

12. A system (100) comprising:
an apparatus (101) for performing a process;
an imaging device (107); and
a computer apparatus (108) comprising one or more processors configured to perform a method according to any of claims 1 to 11, an output device (108E) coupled to the one or more processors, and a non-transitory computer readable medium (108B) coupled to the one or more processors, the computer apparatus (108) operatively coupled to the imaging device (107) and the apparatus (101).

13. A non-transitory computer readable medium (108B) having stored thereon a computer program comprising code which, when executed by one or more processors (100), causes the system of claim 12 to perform a method according to any one of claims 1 to 11.

## Patentansprüche

1. Verfahren, umfassend:
a) Veranlassen (318) einer Bildgebungsvorrichtung (107), ein zweites Bild (520) eines gesamten Decks (105) aufzunehmen, wobei das Deck (105) eine Vielzahl von diskreten Deckpositionen (105A, 105B, 105C) sowie eine Vielzahl verschiedener Komponenten an den jeweiligen diskreten Deckspositionen (105A, 105B, 105C) umfasst;
b) Vergleichen (322) des zweiten Bildes (520) mit einem in einem Speicher (108C) einer Computervorrichtung (108) gespeicherten ersten Bild (510) durch einen Prozessor (100), der mit der Bildgebungsvorrichtung (107) in Verbindung steht;
c) Ermitteln (324) durch den Prozessor (100), ob zwischen dem gesamten zweiten Bild (520) und dem gesamten ersten Bild (510) Unterschiede vorhanden sind; und
d) Ausgeben (326), durch eine Ausgabevorrichtung (108E), die mit dem Prozessor (100) in Verbindung steht, einer Anzeige etwaiger Unterschiede zwischen dem zweiten Bild (520) und dem ersten Bild (510), die zu einer Störung oder einem Ausfall eines auf einer Einrichtung (101) ausgeführten Vorgangs führen könnten,
wobei das erste Bild (510) ein vom zweiten Bild (520) getrenntes digitales Bild umfasst.

2. Verfahren nach Anspruch 1, wobei der Prozessor (100) mithilfe einer Bildvergleichstechnik ermittelt, ob zwischen dem zweiten Bild (520) und dem ersten Bild (510) Unterschiede vorhanden sind, wobei gegebenenfalls eine geeignete Bildvergleichssoftware verwendet wird.

3. Verfahren nach Anspruch 1, wobei die Vielzahl verschiedener Komponenten eine zweite Vielzahl verschiedener Komponenten ist, und das erste Bild (510) eine erste Vielzahl verschiedener Komponenten an den diskreten Deckpositionen (105A, 105B, 105C) umfasst, und wobei die Anzeige etwaiger Unterschiede mindestens eine Deckposition einschließt, die im zweiten und ersten Bild (520, 510) unterschiedliche Komponenten aufweist.

4. Verfahren nach Anspruch 1, wobei das Ermitteln, ob zwischen dem zweiten Bild (520) und dem ersten Bild (510) Unterschiede vorhanden sind, das Ermitteln eines ersten Unterschieds zwischen dem zweiten Bild (520) und dem ersten Bild (510) einschließt, wobei der erste Unterschied einer ersten diskreten Deckposition aus der Vielzahl von diskreten Deckpositionen (105A, 105B, 105C) zugeordnet ist, und wobei die Anzeige etwaiger Unterschiede eine Darstellung des zweiten Bildes (520) einschließt, die einen hervorgehobenen Bereich aufweist, wobei der hervorgehobene Bereich der ersten diskreten Deckposition zugeordnet ist, die dem ersten Unterschied zwischen dem zweiten Bild (520) und dem ersten Bild (510) zugeordnet ist.

5. Verfahren nach Anspruch 1, wobei die Anzeige darauf hinweist, dass zwischen dem zweiten Bild (520) und dem ersten Bild (510) keine Unterschiede vorhanden sind, die zu einer Störung oder einem Ausfall des auf der Einrichtung (101) ausgeführten Vorgangs führen könnten.

6. Verfahren nach Anspruch 1, wobei die Einrichtung (101) so programmiert ist, dass ein Benutzer die Arten von Komponenten konfigurieren kann, die an der Vielzahl von diskreten Deckpositionen (105A, 105B, 105C) angeordnet sein sollen, sodass verschiedene Vorgänge auf der Einrichtung (101) ausgeführt werden können.

7. Verfahren nach Anspruch 1, wobei die Komponenten Laborbedarf umfassen, und wobei die Bildgebungsvorrichtung (107) eine Kamera umfasst.

8. Verfahren nach Anspruch 1, wobei die Einrichtung (101) eine Analysevorrichtung einschließt, die biologische Proben analysiert.

9. Verfahren nach Anspruch 1, wobei die Vielzahl verschiedener Komponenten eine zweite Vielzahl verschiedener Komponenten ist, und das erste Bild (510) eine erste Vielzahl verschiedener Komponenten umfasst, wobei das erste Bild (510) durch Folgendes gebildet wurde:
vor dem Aufnehmen des zweiten Bildes (520), Aufnehmen des ersten Bildes (510) durch die Bildgebungsvorrichtung (107), wobei das Deck (105) die Vielzahl von diskreten Deckpositionen (105A, 105B, 105C) umfasst, wobei die erste Vielzahl verschiedener Komponenten an den jeweiligen diskreten Deckpositionen (105A, 105B, 105C) angeordnet sind.

10. Verfahren nach Anspruch 9, weiter umfassend:
vor dem Aufnehmen des ersten Bildes (510), Empfangen eines Protokolls zur Ausführung des Vorgangs durch die Einrichtung (101);
nach dem Aufnehmen des ersten Bildes (510), Ausführen des Vorgangs durch die Einrichtung (101); und
nach dem Ausführen des Vorgangs, Speichern des ersten Bildes (510) im Speicher (108C).

11. Verfahren nach Anspruch 1, weiter umfassend das Zuordnen einer der Vielzahl von diskreten Deckpositionen (105A, 105B, 105C) zu einem Pixelbereich im zweiten Bild (520).

12. System (100), umfassend:
eine Einrichtung (101) zum Ausführen eines Vorgangs;
eine Bildgebungsvorrichtung (107); und
eine Computervorrichtung (108), die einen oder mehrere Prozessoren umfasst, die dazu konfiguriert sind, ein Verfahren nach einem der Ansprüche 1 bis 11 auszuführen, eine Ausgabevorrichtung (108E), die mit dem einen oder mehreren Prozessoren verbunden ist, sowie ein nichtflüchtiges, computerlesbares Medium (108B), das mit dem einen oder mehreren Prozessoren verbunden ist, wobei die Computervorrichtung (108) funktionsfähig mit der Bildgebungsvorrichtung (107) und der Einrichtung (101) verbunden ist.

13. Nichtflüchtiges, computerlesbares Medium (108B), auf dem ein Computerprogramm gespeichert ist, das Code umfasst, der, wenn er von einem oder mehreren Prozessoren (100) ausgeführt wird, das System nach Anspruch 12 dazu veranlasst, ein Verfahren nach einem der Ansprüche 1 bis 11 auszuführen.

## Revendications

1. Procédé comprenant le fait :
a) d'amener (318) un dispositif d'imagerie (107) à capturer une deuxième image (520) d'un plateau entier (105), le plateau (105) comprenant une pluralité d'emplacements de plateau discrets (105A, 105B, 105C), une pluralité de composants différents étant respectivement dans les emplacements de plateau discrets (105A, 105B, 105C) ;
b) de comparer (322), par un processeur (100) en communication avec le dispositif d'imagerie (107), la deuxième image (520) à une première image (510) stockée dans une mémoire (108C) dans un appareil informatique (108) ;
c) de déterminer (324), par le processeur (100), s'il existe des différences entre la totalité de la deuxième image (520) et la totalité de la première image (510) ; et
d) d'émettre en sortie (326), par un dispositif de sortie (108E) en communication avec le processeur (100), une indication de toutes différences entre la deuxième image (520) et la première image (510) qui peuvent provoquer une perturbation ou une défaillance d'un processus exécuté sur un appareil (101),
dans lequel la première image (510) comprend une image numérique séparée de la deuxième image (520).

2. Procédé selon la revendication 1, dans lequel le processeur (100) détermine s'il existe des différences entre la deuxième image (520) et la première image (510) en utilisant une technique de comparaison d'images, facultativement en utilisant tout logiciel de comparaison d'images approprié.

3. Procédé selon la revendication 1, dans lequel la pluralité de composants différents est une deuxième pluralité de composants différents, et la première image (510) comprend une première pluralité de composants différents dans les emplacements de plateau discrets (105A, 105B, 105C), et dans lequel l'indication de toutes différences inclut au moins un emplacement de plateau présentant des composants différents dans les deuxième et première images (520, 510).

4. Procédé selon la revendication 1, dans lequel la détermination de l'existence ou non de différences entre la deuxième image (520) et la première image (510) inclut la détermination d'une première différence entre la deuxième image (520) et la première image (510), la première différence étant associée à un premier emplacement de plateau discret parmi la pluralité d'emplacements de plateau discrets (105A, 105B, 105C), et dans lequel l'indication de toutes différences inclut une représentation de la deuxième image (520) présentant une zone mise en évidence, la zone mise en évidence étant associée au premier emplacement de plateau discret associé à la première différence entre la deuxième image (520) et la première image (510).

5. Procédé selon la revendication 1, dans lequel l'indication indique qu'il n'existe pas de différences entre la deuxième image (520) et la première image (510) qui peuvent provoquer une perturbation ou une défaillance du processus exécuté sur l'appareil (101).

6. Procédé selon la revendication 1, dans lequel l'appareil (101) est programmé pour permettre à un utilisateur de configurer des types de composants qui doivent être situés dans la pluralité d'emplacements de plateau discrets (105A, 105B, 105C) de sorte que des processus différents puissent être exécutés sur l'appareil (101).

7. Procédé selon la revendication 1, dans lequel les composants comprennent du matériel de laboratoire, et dans lequel le dispositif d'imagerie (107) comprend une caméra.

8. Procédé selon la revendication 1, dans lequel l'appareil (101) inclut un analyseur qui analyse des échantillons biologiques.

9. Procédé selon la revendication 1, dans lequel la pluralité de composants différents est une deuxième pluralité de composants différents, et la première image (510) comprend une première pluralité de composants différents, dans lequel la première image (510) a été formée par :
avant la capture de la deuxième image (520), la capture de la première image (510) par le dispositif d'imagerie (107), le plateau (105) comprenant la pluralité d'emplacements de plateau discrets (105A, 105B, 105C), la première pluralité de composants différents étant respectivement dans les emplacements de plateau discrets (105A, 105B, 105C).

10. Procédé selon la revendication 9, comprenant en outre le fait :
avant la capture de la première image (510), de recevoir, par l'appareil (101), un protocole pour exécuter le processus ;
après la capture de la première image (510), d'exécuter, par l'appareil (101), le processus ; et
après l'exécution du processus, de stocker la première image (510) dans la mémoire (108C).

11. Procédé selon la revendication 1, comprenant en outre le fait de mettre en correspondance l'un de la pluralité d'emplacements de plateau discrets (105A, 105B, 105C) avec une plage de pixels dans la deuxième image (520).

12. Système (100) comprenant :
un appareil (101) pour exécuter un processus ;
un dispositif d'imagerie (107) ; et
un appareil informatique (108) comprenant un ou plusieurs processeurs configurés pour exécuter un procédé selon l'une quelconque des revendications 1 à 11, un dispositif de sortie (108E) couplé aux un ou plusieurs processeurs, et un support non transitoire lisible par ordinateur (108B) couplé aux un ou plusieurs processeurs, l'appareil informatique (108) étant fonctionnellement couplé au dispositif d'imagerie (107) et à l'appareil (101).

13. Support non transitoire lisible par ordinateur (108B) sur lequel est stocké un programme informatique comprenant un code qui, lorsqu'il est exécuté par un ou plusieurs processeurs (100), amène le système selon la revendication 12 à exécuter un procédé selon l'une quelconque des revendications 1 à 11.
